Europäisches Patentamt

European Patent Office

Office européen des brevets

(11) Veröffentlichungsnummer: **0 291 072**

**A2**

(12) **EUROPÄISCHE PATENTANMELDUNG**

(21) Anmeldenummer: 88107711.9

(22) Anmeldetag: 13.05.88

(51) Int. Cl.⁴: **B60H 3/06**

(30) Priorität: 15.05.87 DE 3716243

(43) Veröffentlichungstag der Anmeldung:
17.11.88 Patentblatt 88/46

(84) Benannte Vertragsstaaten:
**CH DE FR GB IT LI NL**

(71) Anmelder: **Drägerwerk Aktiengesellschaft**
**Moislinger Allee 53-55**
**D-2400 Lübeck 1(DE)**

(72) Erfinder: **Eckstein, Wolfgang**
**Friedrich-Ebert-Ring 19**
**D-2407 Sereetz(DE)**
Erfinder: **Schirk, Karl-Heinz**
**Kaninchenbergweg 62 g**
**D-2400 Lübeck(DE)**

(54) **Filteranordnung zur Reinhaltung beluefteter Fahrzeuginnenräume.**

(57) Eine Filteranordnung zur Reinhaltung belüfteter Fahrzeuginnenräume, enthaltend einen Grobstaubvorabscheider, ein Schwebstoffilter und ein Gasfilter, soll in der Weise verbessert werden, daß sich eine Anpassung der notwendigen Filterstandzeiten an die Gasfilterstandzeit ausrichten kann und daß ein Auswechseln der Filter erst dann erforderlich wird, wenn beide zur annähernd gleichen Zeit aufgebraucht sind. Dazu ist vorgesehen, daß an einem Gehäuse (5) der Grobstaubvorabscheider als Zyklonfilter (19) hoher Abscheideleistung angebracht ist, dem strömungsmäßig mindestens ein in einem gemeinsamen Filtergehäuse (1) untergebrachtes Schwebstoffilter (21) und Gasfilter (20) als Filtermodul nachgeschaltet ist.

Fig. 1

## Filteranordnung zur Reinhaltung belüfteter Fahrzeuginnenräume

Die Erfindung betrifft eine Filteranordnung zur Reinhaltung belüfteter Fahrzeuginnenräume, die einen Grobstaubvorabscheider, ein Schwebstofffilter und ein Gasfilter enthält.

Derartige Filteranordnungen dienen hauptsächlich zur Reinhaltung von Fahrzeugen oder Kampfgeräten, die in mit Schadstoffen gasförmiger oder partikelförmiger Zusammensetzung verseuchten Gebieten eingesetzt werden.

Die engen Platzverhältnisse für das Personal, welches in solchen Fahrzeugen oder Geräten geschützt untergebracht werden soll, erzwingen eine räumlich eingegrenzte Ausführungsform der jeweiligen Filterelemente.

In bekannten Filteranordnungen sind die einzelnen Filter jeweils für sich in einem gemeinsamen Gehäuse auswechselbar eingebaut. Je nach Belastung der Umgebungsluft mit Staubpartikeln oder gasförmigen Schadstoffen sind die Filter zu unterschiedlichen Zeitpunkten gegen neue auszuwechseln.

Wegen des im Fahrbetrieb in höheren Konzentrationen auftretenden Staubes, besonders im Gelände, sind die Schwebstofffilter oft nach kurzer Einsatzzeit verstopft. Die Gasfilter halten stets länger, da die Substanzen, für deren Beseitigung sie vorgesehen sind, im Regelfall in geringen Konzentrationen auftreten. Daher bestand bisher der Zwang, daß man Schwebstofffilter und Gasfilter getrennt auswechseln konnte.

Das Vorschalten eines Vorabscheiders bringt in diesem Zusammenhang keine Verbesserung, weil es die Auswechselnotwendigkeit auf drei Filterstufen ausdehnt. Es müssen jetzt drei unterschiedliche Abscheideleistungen auf einen nicht vorhersehbaren Schadstoffanfall abgestimmt werden (DE-PS 26 35 860).

Der vorliegenden Erfindung liegt somit die Aufgabe zugrunde, eine Filteranordnung der genannten Art so zu verbessern, daß sich eine Anpassung der notwendigen Filterstandzeiten mehr an die Gasfilterstandzeit ausrichten kann. Ein Auswechseln der Filter soll erst dann erforderlich werden, wenn beide annähernd zur gleichen Zeit aufgebraucht sind.

Die Lösung der Aufgabe erfolgt bei einer Filteranordnung gemäß dem Oberbegriff des Anspruchs 1 durch dessen kennzeichnende Merkmale.

Durch den leistungsfähigen Zyklonabscheider wird ein Großteil der Staubpartikel aus dem weiteren Luftstrom ausgeschieden und braucht für die Bemessung der Standzeit des Schwebstofffilters nicht mehr berücksichtigt zu werden.

Unter vergleichbaren Betriebsbedingungen beträgt die Standzeit des Schwebstofffilters das Zwei-

bis Dreifache der bisherigen. Dessen früher kürzere Standzeit kann entsprechend derjenigen des Gasfilters angepaßt werden. Dies wiederum führt zu einer raumsparenden und dennoch wirkungsvolleren Anordnung der beiden Filter innerhalb eines modulartigen Gehäuses, welche nunmehr gleichzeitig auswechselbar sind. Dadurch wird die Bedienungs- und Wartungszeit verkürzt und der Aufwand für einen Filterwechsel vereinfacht.

Die Modulbauweise läßt sich günstig auf mehrere Filtergehäuse erweitern, so daß mehrere, auf einfache Weise in das Gesamtgehäuse einbringbare Filtermodule an eine gemeinsame Luftverteilerkammer angeschlossen werden können. Damit ist eine bessere Anpassung der Filterbestückung vor Ort je nach vorgefundenem Schadstoffanfall möglich. Man kann beispielsweise ein Gehäuse, welches drei Filtermodule (Schwebstofffilter kombiniert mit Gasfilter) aufnehmen kann, zunächst für den erwarteten Schadstoffanfall mit nur zwei Modulen bestücken und nachträglich, wenn die Schadstoffmenge sich vergrößert, das dritte Modul hinzufügen, wobei der bis dahin leere Platz durch einen geeigneten Blindverschluß von der Luftverteilerkammer des Zyklonabscheiders abgetrennt war.

Eine besonders platzsparende und gut mit der Luftverteilerkammer dichtend verbindbare Bauform wird durch den domförmigen Aufsatz für das Gasfilter auf dem Grundkörper des Schwebstofffilters erzielt. Dadurch wird neben den Domwänden genügend Raum für Bedienungselemente wie Verschlußhebel, Anschlußstücke und Sicherungsriegel bereitgestellt, ohne daß die Filterleistungsfähigkeit darunter leiden müßte. Es hat sich herausgestellt, daß ein günstiger Domdurchmesser etwa nur die Hälfte der Ausdehnung des Gasfiltergehäuses benötigt.

Es ist zweckmäßig, das Gehäuse an seinen Stirnflächen mit Deckeln zu versehen, durch die sämtliche Teile, die zur Befestigung und zum Lösen der Module nötig sind, beidseitig betätigbar werden. Dadurch ist die Zugänglichkeit zu Wartungszwecken und für die Auswechslung der Module verbessert.

Ein Ausführungsbeispiel der Erfindung wird anhand der schematischen Zeichnung dargestellt und im folgenden näher erläutert.

Es zeigen:

Fig. 1 einen Querschnitt durch ein Gehäuse mit angeflanschtem Zyklonabscheider und eingesetztem Filtermodul,

Fig. 2 eine Draufsicht auf das offene Gehäuse mit drei Filtermodulen.

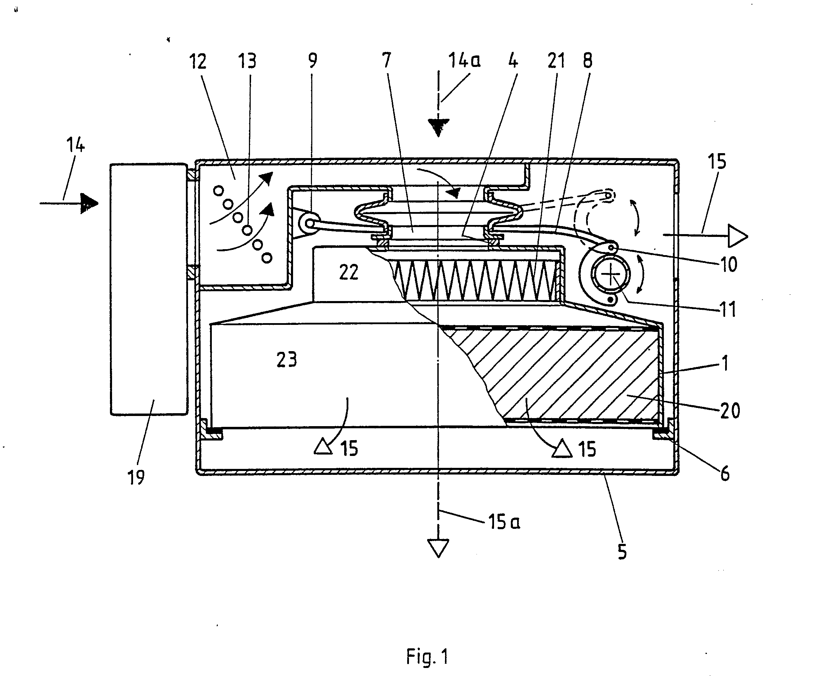

In Fig. 1 besteht das Filtermodul (1) aus einem rechteckigen, das Gasfiltermaterial (20) enthaltenden Teil (23) und einem aufgesetzten kleineren, vorzugsweise runden, das Schwebstoffilter (21) enthaltenden Teil (22). Die Dichtung (4) dient der dichten Einspannung im Gehäuse (5).

Im Gehäuse (5) werden das oder die Filtermodule (1) auf Schienen (6) gleitend eingesetzt. Der Luftanschluß geschieht dadurch, daß ein beweglicher Anschlußteil (7) an das Filter bzw. seine Dichtung (4) herangeführt und angepreßt wird. Dies bewerkstelligt der Federbügel (8), welcher am Bock (9) gelagert und mittels Kniehebelmechanik (10) auf-und niederbewegt werden kann. Die Betätigung der Kniehebelmechanik (10) erfolgt durch Drehen der gehäusefest gelagerten Welle (11). Die Welle (11) verläuft im Zwickel zwischen dem domförmigen Schwebstoffilterteil (22) und dem Gasfilterteil (23); dadurch wird ein erheblicher Beitrag zur raumsparenden Bauweise geleistet. Der noch freie andere Zwickel wird dazu genutzt, im Gehäuse (5) lage-und strömungsgünstig sowie platzsparend eine Luftverteilerkammer (12) anzuordnen, die die Strömungsverbindung zwischen einem am Gehäuse (5) angeflanschten Zyklonfilter (19) als Grobstaubvorabscheider zu den Modulen (1) bildet.

Diese Kammer (12) kann nunmehr auch ohne zusätzlichen Raumbedarf eine Luftheizung (13) aufnehmen, die dann benötigt wird, wenn sehr feuchte Luft angesaugt wird, die die Gasfilter (20) - schädigen würde.

Die Lufteinlaßpfeile (14, 14a) bzw. -auslaßpfeile (15, 15a) zeigen, daß es möglich ist, die Stelle der Luftanschlüsse entsprechend den räumlichen Gegebenheiten im Fahrzeug zu wählen und dementsprechend den Zyklonfilter (19) wahlweise seitlich oder oben anzubringen. Das gleiche gilt für die - nicht gezeichneten - Gebläse. Wenn der Lufteinlaß von oben (14a) erfolgt, dann wird die Heizung (13) im oberen flachen Teil der Kammer (12) untergebracht.

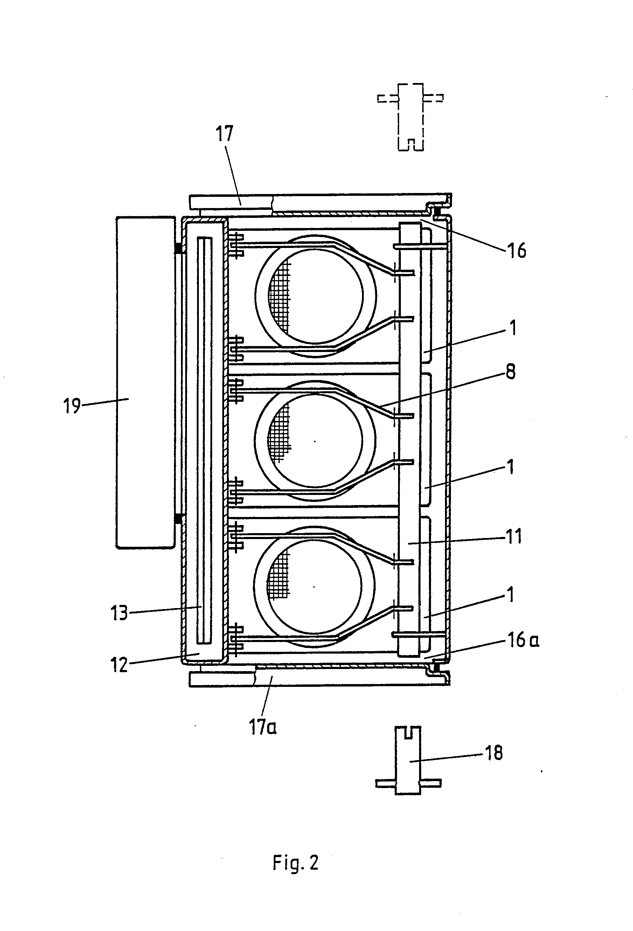

Die Wahl der Gehäuseöffnung (16, 16a) in Fig. 2 zum Wechseln des Filtermoduls (1) bleibt ebenfalls frei. So kann die Öffnung hinten oder vorne liegen. Sie kann auch hinten und vorne liegen, wenn z. B. die Filterelemente vom Fahrzeuginneren her in das Gehäuse (5) eingesetzt werden, weil die benutzten Filterelemente, die u. U. Giftstoffe enthalten, nach außen ins Gelände ausgestoßen werden sollen. Das Filtergehäuse (1) schließt dann mit der betreffenden Öffnung an die Fahrzeugaußenwand an. Deckel (17, 17a) verschließen die Gehäuseöffnungen. Die Welle (11) ist nach dem Wegnehmen eines der Deckel (17, 17a) zugänglich und mit Hilfe eines Schlüssels (18) betätigbar. Die Filterverspannung kann auf Anpreßgewinde verzichten, wie sie bisher üblich waren, sondern bedient sich der bereits erwähnten Kniehebelmechanik (10), bei der ein sehr einfacher Bewegungsablauf - eindeutige Auf-/Zu-Stellung -möglich wird.

**Ansprüche**

1. Filteranordnung zur Reinhaltung belüfteter Fahrzeuginnenräume, enthaltend einen Grobstaubvorabscheider, ein Schwebstoffilter und ein Gasfilter, dadurch gekennzeichnet, daß an einem Gehäuse (5) der Grobstaubvorabscheider als Zyklonfilter (19) hoher Abscheideleistung angebracht ist, dem strömungsmäßig mindestens ein in einem gemeinsamen Filtergehäuse (1) untergebrachtes Schwebstoffilter (21) und Gasfilter (20) als Filtermodul nachgeschaltet sind.

2. Filteranordnung nach Anspruch 1, dadurch gekennzeichnet, daß mehrere Filtermodule (1) kassettenartig in dem Gehäuse (5) untergebracht sind und daß die jeweiligen Gaseinlaßstutzen (7) der Filtermodule (1) mit einer gemeinsamen Luftverteilerkammer (12) an den Strömungsausgang des Vorabscheiders (19) verbunden sind.

3. Filteranordnung nach Anspruch 1, dadurch gekennzeichnet, daß das Filtermodul (1) einen eckigen Grundkörper (23) für die Aufnahme des Gasfilters (20) mit einem einstückig aufgesetzten Dom (22) für die Aufnahme des Schwebstoffilters (21) besitzt.

4. Filteranordnung nach einem der Ansprüche 1 bis 3, dadurch gekennzeichnet, daß das Gehäuse (5) an seinen beiden Stirnseiten mit Deckeln (17, 17a) versehen ist, nach deren Abnehmen die Halterungselemente (7, 8, 9, 10, 11) für die Filtermodule (1) betätigbar sind.

88 102 711 - 9.

Fig. 1

Fig. 2